Europäisches Patentamt

European Patent Office

Office européen des brevets

(11) Veröffentlichungsnummer: **0 307 829 B1**

## EUROPÄISCHE PATENTSCHRIFT

(45) Veröffentlichungstag der Patentschrift: **20.05.92**

(51) Int. Cl.5: **A01K 91/06**

(21) Anmeldenummer: **88114836.5**

(22) Anmeldetag: **10.09.88**

(54) Schnurstopper.

(30) Priorität: **15.09.87 DE 3730918**

(43) Veröffentlichungstag der Anmeldung:
**22.03.89 Patentblatt 89/12**

(45) Bekanntmachung des Hinweises auf die
Patenterteilung:
**20.05.92 Patentblatt 92/21**

(84) Benannte Vertragsstaaten:
**AT DE FR GB IT NL SE**

(56) Entgegenhaltungen:
**US-A- 4 195 435**
**US-A- 4 464 858**

(73) Patentinhaber: **Thiemann, Gerhard**
**Heerstrasse 40**
**W-7141 Murr(DE)**

(72) Erfinder: **Thiemann, Gerhard**
**Heerstrasse 40**
**W-7141 Murr(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.08/2.19/2.0)

**Beschreibung**

Die Erfindung bezieht sich auf einen Schnurstopper.

Aus einem Vollkörper, mit einem zentrischen Schnurdurchgang bestehende Schnurstopper sind bekannt (US-A-4 195 435). Diese bekannten Schnurstopper weisen den Nachteil auf, daß sie nur für das Anliegen an die Öffnung von Angelposenösen geeignet sind. Ferner weisen sie den Nachteil auf, daß sie auf dem Schnurdepot der Angelrollen eine punktuell anstehende Unebenheit verursachen können.

Zweck der vorliegenden Erfindung ist es nun, diesen Nachteil zu beheben und einen Schnurstopper zu schaffen, welcher durch die Ausführungsform und durch die Eigenschaft des zu seiner Herstellung verwendeten Materials, für das Einrasten in die Öffnung von Angelposenösen geeignet ist, wenn eine entsprechend auf ihn einwirkende Kraft zur Übertragung kommt. Damit wird eine weitgehend optimale Anwendung erzielt, insbesondere auch für ein Angelverfahren, zu dessen Durchführung der anmeldungsgemäße Schnurstopper erforderlich ist.

Zur Lösung dieser Aufgabe wird ein Schnurstopper der gemäß Anspruch 1 oder Anspruch 2 vorgeschlagen.

In der Größenordnung soll der gewellte Schenkel unter Einbeziehung des Abstands zwischen den Schenkeln in der Weise ausgeführt werden, daß die Wellungen teils seitwärts nach dem Einrasten aus der Ösenöffnung vorstehen und der Schnurstopper dabei bis zu den Anstellwinkeln der beiden Wellungen, in der entsprechenden Angelposenöse axial- und/oder drehbewegbar ist. Selbstverständlich kann er erforderlicherweise auch gänzlich durch die Ösenöffnung durchgedrückt und/oder durchgezogen werden.

Es ist an sich belanglos, ob der Schnurstopper gemäß der Form aus einem geraden- und einem gewelltem Schenkel gegründet ist, oder aus einer ebenen flexiblen Metallfolie besteht, welche dementsprechend von einer geradlinigen- und einer wellenlinigen Strecke umrissen ist. Allerdings ist es dann zweckmäßig, daß die Breitenfelder der Metallfolie, jeweils eine kleine, nicht eingezeichnete Kröpfung aufweisen, welche in linearer Verlängerung zu den Anstellwinkeln der Breitenfelder angeordnet sind.

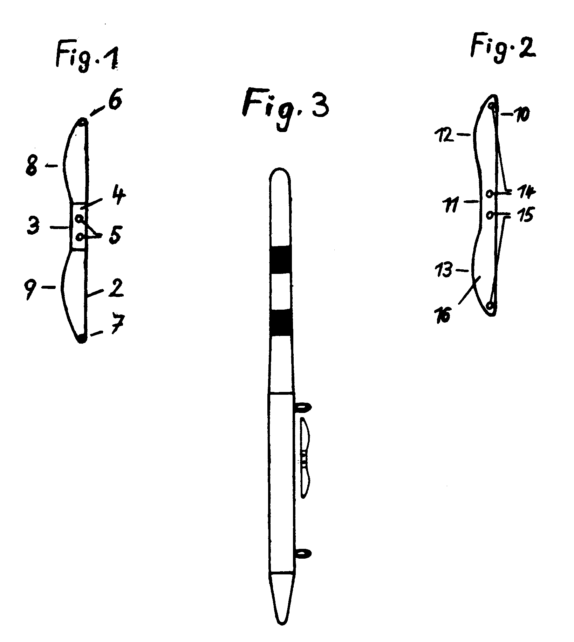

Am Prinzip der Einraststeuerung ändert sich dabei im wesentlichen nichts. Während beim Schnurstopper Fig. 1, das Einrasten in die Öffnung der Angelposenöse, infolge einer Kraftausübung auf die stets in die Ausgangsstellung federnd zurückstrebenden Schenkel des Schnurstoppers zustande kommt, erfolgt das Einrasten beim gezeigten Beispiel (Figur 2), durch das stets in die Ausgangsstellung drehfedernde Zurückstreben der Breitenfelder des entsprechenden Schnurstoppers.

Die Erfindung wird nachstehend anhand von in der Zeichnung rein schematisch dargestellten Ausführungsbeispielen noch etwas näher erläutert. Es zeigt

Fig. 1 in Seitenansicht ein Ausführungsbeispiel eines vollständigen anmeldungsgemäßen Schnurstoppers,

Fig. 2 eine Variante des Schnurstoppers, welcher aus einer ebenen Metallfolie besteht,

Fig. 3 den Schnurstopper im Stand des Schnurwegs zwischen zwei Angelposenösen.

Fig. 1 zeigt den Schnurstopper in stark vergrößerter Darstellung. Aus der Zeichnung geht der prinzipielle Aufbau des Schnurstoppers besonders gut hervor. Er besteht aus dem geraden Schenkel 2, dem gewellten Schenkel 3 mit den gleichweit vorstehenden Breitenstellen 8,9, der flexiblen Metallfolie 4 mit den ausgesparrten Löchern 5 und den an den Schenkelenden liegend angeordneten Schnurösen 6,7.

Die für den Einrastvorgang erforderliche Kraft wird auf den Schnurstopper, durch die nicht eingezeichnete Angelschnur zugeführt, an welcher er mittels der in der Metallfolie 4 eingebrachten Löcher 5 und mittels der an den Endstellen der Schenkel liegend angeordneten Schnurösen 6,7, verstellbar befestigt ist.

Die Länge des Einrastwegs ist selbstverständlich frei wählbar, wie auch z. B. der Anstellwinkel der Wellungen, der vorteilhaft so gewählt wird, daß zur Überwindung des Reibungswiderstands zwischen der Innenwandung der Angelposenöse und den betreffenden Stellen des Schnurstoppers, ein niedriger Kraftaufwand ausreichend ist.

Damit wird mit einfachsten Mitteln gegenüber den bisher bekannten Schnurstoppern, eine wesentlich bessere Leistung erzielt, insbesondere auch in Eignung für ein neuartiges Angelverfahren, das nachstehend noch etwas näher erläutert wird.

Fig. 2 der Zeichnung zeigt noch in starker Vergrößerung eine Variante des Schnurstoppers, welcher im wesentlichen gleich aufgebaut ist, wie jener nach Fig. 1, jedoch gänzlich aus einer ebenen flexiblen Metallfolie besteht. Deutlich sind in der Metallfolie 16 die parallel zur geradlinigen Strecke 10 angeordneten Löcher 14,15 zu erkennen. Gegenüber der geradlinigen Strecke 10 sind die aus der wellenlinigen Strecke 11 gebildeten Breitenfelder 12,13, deutlich sichtbar dargestellt.

Aus Fig. 3 der Zeichnung ist nicht ersichtlich, daß zur Durchführung eines mit den üblichen Schnurstoppern bisher nicht realisierbaren Angelverfahrens, der anmeldungsgemäße Schnurstopper, durch die untere Öse der in der Zeichnung dargestellten Angelpose durchgerastet ist.

Die Durchführung des bereits erwähnten neuartigen Angelverfahrens kann nur in Fließgewässern bewerkstelligt werden nachdem der neue Schnurstopper unter Berücksichtigung der Wassertiefe, an der Hauptschnur einer ausgelegten Grundangel befestigt worden ist. Danach wird eine entsprechend austarierte Angelpose mittels Durchlässen in den Schnurösen, an der Hauptschnur der Grundangel eingehängt und ins Wasser gelassen. Durch die Kraft des fließenden Wassers treibt sie dann entlang der Hauptschnur bis zur Position des an ihr befestigten Schnurstoppers. Sobald die Angelpose mit der unteren Öse am Schnurstopper anliegt, kann sie mittels eines Anhiebs, über mindestens drei Stationen am Schnurstopper eingerastet werden. Wie aus Fig. 3 der Zeichnung ersichtlich, entweder in die untere Öse, oder in die obere Öse, eine weitere Möglichkeit besteht im Schnurweg zwischen beiden Ösen. Ist die Angelpose am Schnurstopper eingerastet, treibt sie durch die Strömungskraft des Wassers infolge einer dosierten Schnurzugabe bis in die Nähe des am Grunde liegenden Köders. Beim Anbiß wird der Fisch den Köder ohne mißtrauisch zu werden annehmen, weil er durch die locker am Grunde liegende Angelschnur, vorerst keinen von der Angelrute ausgehenden Widerstand verspüren kann.

Bei Anwendung des vorstehend beschriebenen Angelverfahrens kann der Angler von standfesten Uferstellen aus, in jenen Regionen eines Fließgewässers den Fischfang, unter Verwendung einer Angelpose ausüben, dessen Uferzonen unbegehbar sind jedoch entfernungsgemäß noch durch einen Wurf mit einer Grundangel befischbar sind.

Selbstverständlich kann der neue Schnurstopper auch vor dem Auswurf in jegliche Art von Gewässern, mittels Fingerdruck in die Öffnung von allgemein verwendeten Angelposen eingerastet werden.

Bei Verwendung einer Laufpose wird die Eintauchtiefe in der der Köder angeboten werden soll, mittels des neuen Schnurstoppers oberhalb an der Angelschnur der entsprechenden Angelpose eingestellt.

Beim Aufrollen der Angelschnur verursacht der Schnurstopper keine nennenswerte Unebenheit auf dem Schnurdepot der Angelrolle, weil er sich flexibel an die Rundung der Schnurbahn anpaßt.

Bezugszeichenliste

| 1 | ----- |
| 2 | gerader Schenkel |
| 3 | gewellter Schenkel |
| 4 | flexible Metallfolie |
| 5 | Löcher |
| 6 | Schnurösen |
| 7 | Schnurösen |
| 8 | Breitenstelle |
| 9 | Breitenstelle |
| 10 | geradlinige Strecke |
| 11 | wellenlinige Strecke |
| 12 | Breitenfeld |
| 13 | Breitenfeld |
| 14 | Löcher |
| 15 | Löcher |
| 16 | flexible Metallfolie |

## Patentansprüche

1. "Schnurstopper zum Ankoppeln von Angelposen, der eine ebene, mit Löchern (5) versehene, flexible Metallfolie (4), an der einen Längsseite der Metallfolie einen über das Längenmaß der Metallfolie an beiden Enden hinausragenden geraden federnden Schenkel (2) und an der gegenüberliegenden Längsseite einen an beiden Enden über das Längenmaß der Metallfolie hinausragenden, nach außen gewellten, federenden Schenkel (3) aufweist, der im Streckenabschnitt zwischen den Wellungen (8,9) im wesentlichen parallel zum geraden Schenkel (2) verläuft, wobei beide Schenkel im Verlauf der parallelen Strecke durch die flexible Metallfolie (4) verburdschlüssig zusammengehalten sind und an den Endstellen der Schenkel (2,3) Schnurösen (6,7) angeordnet sind, die an den sie kraftschlüssig mit den Endstellen umspannenden Schenkeln (2,3), in liegender und paralleler Anordnung zu den Löchern (5) der Metallfolie (4) befestigt sind."

2. "Schnurstopper zum Ankoppeln von Angelposen, der aus einer ebenen, federnden Metallfolie (16) besteht und der formgemäß von einer geradlinigen Strecke (10) und einer gegenüberliegenden, nach außen gewellten Strecke (11) umrissen ist, die einen Streckenabschnitt zwischen den Wellungen (12, 13) aufweist, der im wesentlichen parallel zu der geradlinigen Strecke verläuft, und der im Bereich des parallelen Abschnitts parallel zu der geradlinigen Strecke angeordnete Löcher (14, 15) und an den Endstellen der Strecken in liegender und paralleler Anordnung zu den Löchern angeordnete Schnurösen aufweist."

## Claims

1. "Line stopper to couple floats consisting of a flat flexible metal foil (4) with perforations (5), having a straight resilient extension (2) on one of the long sides of the metal foil protruding at both ends beyond the foil and a resilient extension (3) on the other long side protruding at both ends beyond the foil and bent outwards, running parallel between the bulging sections (8, 9) to the straight extension (2), both extensions being held together in the parallel section by the flexible metal foil (4), with rings (6, 7) at the ends of the extensions (2, 3) friction-locked to the extensions (2, 3) at their respective ends parallel to and in the same plane as the perforations (5) in the metal foil (4)."

2. "Line stopper to couple floats comprising a flat resilient metal foil (16) with a straight section (10) and an opposite section with two outward bulges (11) and a section between the two bulges (12, 13) which is essentially parallel to the straight section and with holes (14, 15) parallel to the parallel section and rings at the ends of the sections parallel to and in the same plane as the holes."

**Revendications**

1. "Dispositif de blocage de fil de ligne destiné à être monté sur un flotteur et se composant d'une plaquette métallique plane et flexible munie de perforations (5), laquelle est dotée sur un de ses côtés longitudinaux d'une branche (2) souple rectiligne d'une longueur supérieure à la plaquette de métal et dépassant celle-ci sur ses deux extrémités, et sur le côté opposé au premier d'une branche souple (3) composée de deux ondulations convexes et d'une longueur supérieure à la plaquette de métal et dépassant celle-ci sur ses deux extrémités, laquelle branche étant dans sa section située entre les deux ondulations (8 et 9) sensiblement parallèle à la branche rectiligne (2); les deux branches se distinguant par le fait qu'elles sont rigidement reliées sur leur course parallèle par la plaquette métallique flexible (4) et qu'elles sont dotées à leur extrémité respectives (2 et 3) de châs (6 et 7), lesquels sont rigidement fixés à ces branches (2 et 3) au niveau de leur extrémité respective, parallèlelement et sur le même plan que les perforations (5) de la plaquette métallique (4)."

2. "Dispositif de blocage de fil de ligne destiné à être monté sur un flotteur et se composant d'une plume métallique plane et flexible (16) dont la forme représente une branche rectiligne (10) et une branche opposée à deux ondulations convexes (11), dont une section située entre les deux ondulations (12, 13) est sensiblement parallèle à la branche opposée rectiligne; lequel dispositif de blocage est doté au niveau de sa section parallèle, de perforations (14, 15) elles-mêmes parallèles à la branche rectiligne, et munies aux extrémités respectives des branches de châs rigidement fixés à ces branches au niveau de leur extrémité respective.

Fig. 1

Fig. 3

Fig. 2